# EUROPÄISCHE PATENTSCHRIFT

(11) **EP 1 414 674 B1**
(45) Veröffentlichungstag und Bekanntmachung des Hinweises auf die Patenterteilung: **18.10.2006**
(21) Anmeldenummer: 02794752.2
(22) Anmeldetag: 05.08.2002
(51) Int. Cl.: B60R 15/00, B60N 3/18

(54) **MEMBRANTANK**
MEMBRANE TANK
CUVE A MEMBRANE INTEGREE

(30) Priorität: 07.08.2001 DE 10138699
(43) Veröffentlichungstag der Anmeldung: 06.05.2004
(73) Patentinhaber: Feistmantl, Manfred, A-6123 Terfens (AT)
(72) Erfinder: FEISTMANTL, Manfred, A-6123 Terfens (AT); LADNER, Bernhard, A-6401 Inzing (AT); LEITER, Bernhard, A-6425 Haiming (AT)
(74) Vertreter: Rupp, Christian
(86) Internationale Anmeldenummer: PCT/EP2002/008727
(87) Internationale Veröffentlichungsnummer: WO 2003/016096

(56) Entgegenhaltungen:
- DE-A- 3 146 533
- DE-A- 3 706 591
- DE-A- 4 429 529
- DE-A- 10 056 695
- DE-U- 8 416 257
- DE-U- 8 716 514
- DE-U- 8 808 764
- DE-U- 9 316 440
- DE-U- 29 505 676

## Beschreibung

Die vorliegende Erfindung betrifft Tankbehälter zur gleichzeitigen getrennten Aufnahme zweier Flüssigkeiten, die ein flexibles, für Flüssigkeiten undurchlässiges Trennelement aufweisen, das in den Tankbehälter in wenigstens zwei variierende Aufnahmeräume, beispielsweise für zwei getrennte Flüssigkeiten, unterteilt.

Aus der DE 31 46 533 A1 ist es bekannt, in einem starren Behälter mindestens einen flexiblen Behälter anzuordnen, so dass beispielsweise Frisch- und Abwasser in einem geschlossenen Kreislauf verwendet werden kann. Frischwasser kann aus dem Frischwasserbehälter entnommen werden und schließlich wieder als Abwasser in den Abwasserbehälter zurückgeführt werden.

Aus der DE-U 295 05 676 ist ein Wasserbehälter für den mobilen Einsatz bekannt, der den Oberbegriff des Anspruchs 1 entspricht der durch eine bewegliche Trennfolie in einen Teil für Frischwasser und einen Teil für Abwasser unterteilt ist, so dass das Verhältnis zwischen Frisch- und Abwasser variabel ist.

Aus der DE-U 84 16 257 ist ein Wasserbehälter für Frischwasser bekannt, in dem eine weitere Durchführung für eine Schmutzwasserleitung vorgesehen ist, an deren Ende eine flexible Blase flüssigkeitsdicht verbunden ist.

Aus der DE-U 87 16 514 ist ein Wassertank für Wohnmobile etc. bekannt, der mit einem Anschluss für Frischwasser und mit einem in einem Abstand von diesem angeordneten Anschluss für Altwasser ausgebildet ist. Dabei ist der Behälter durch eine in einer Mittelebene zwischen den Anschlüssen verlaufende und in ihrer Fläche veränderbare Membran in zwei Abteilungen unterteilt.

Aus der G 93 16 440 ist ein Behälter für die getrennte Aufnahme von zwei Flüssigkeiten, vorzugsweise Frischwasser und Abwasser bekannt. Dabei ist in einem äußeren Behälter wenigstens eine Trennwand für die Abteilung von zwei Aufnahmeräumen vorgesehen, wobei die beiden Aufnahmeräume in ihrem Volumen veränderbar sind.

Allgemein ist es Vorteil der gattungsgemäßen Tankbehälter, dass beispielsweise der Platzbedarf für die Rückführung von Abwasser etwa auf die Hälfte reduziert wird, wenn berücksichtigt wird, dass normalerweise als Abwassertank ein Volumen notwendig ist, das im Wesentlichen dem des Vorratstanks (Frischwassertank) entspricht. Bei einem Einsatz auf Fahrzeugen etc. ist ein weiterer Vorteil; dass durch die Rückführung von Brauchwasser entsprechend dem Anteil an entnommenem Frischwasser in denselben Tankbehälter die Gewichtsverteilung des Fahrzeugs im Wesentlichen unbeeinflusst bleibt. Dies ist beispielsweise vorteilhaft für das daraus resultierende Fahrverhalten des Fahrzeugs.

Es ist Aufgabe der vorliegenden Erfindung, einen gattungsgemäßen Tankbehälter mit Trennelement derart weiterzubilden, dass er bei Beibehaltung der oben genannten bekannten Vorteile weitere Funktionalitäten aufweist.

Diese Aufgabe wird durch die Merkmale der unabhängigen Ansprüche gelöst. Die abhängigen Ansprüche bilden den zentralen Gedanken der Erfindung in besonders vorteilhafter Weise weiter.

Erfindungsgemäß ist also ein Tankbehälter zur gleichzeitigen getrennten Aufnahme zweiter Flüssigkeiten vorgesehen, der ein flexibles, für die Flüssigkeiten undurchlässiges Trennelement wie beispielsweise eine Folie oder Membran aufweist, die den Tankbehälter in wenigstens zwei variierende Aufnahmeräume für die Flüssigkeiten teilt. Für jeden der Aufnahmeräume sind ein Ein- und ein Auslass vorgesehen. Gemäß der Erfindung ist strömungstechnisch zwischen dem Ein- und dem Auslass für wenigstens eine der Flüssigkeiten ein Filter- oder Siebelement vorgesehen. Somit dient der Tankbehälter auch als Reinigungsvorrichtung für die Flüssigkeit in demjenigen Aufnahmeraum, in dem das Filter- oder Siebelement angeordnet ist.

Das Filter- oder Siebelement setzt dabei den Aufnahmeraum für die entsprechende Flüssigkeit durch was eine sehr große effektive Filter- oder Siebfläche ergibt. Somit steigt bei gleichbleibender Filter- oder Siebleistung der Gesamtdurchsatz durch das Filter- oder Siebelement.

Das Filter- oder Siebelement kann die Form eines Zylinders aufweisen, so dass sich einer von Einlass und Auslass für die entsprechende Flüssigkeit außerhalb und der jeweils andere innerhalb des Zylinders befindet.

Das Filter- oder Siebelement kann aus Lochblech angefertigt sein.

Das Filter- oder Siebelement kann derart angeordnet sein, dass ein Blockieren des Auslasses für die zu filternde bzw. zu siebende Flüssigkeit durch das flexible Trennelement vermieden wird.

Der Einlass und der Auslass für die zu filternde bzw. zu siebende Flüssigkeit können sich an aneinander abgewandten Seiten des Tankbehälters befinden.

Das Filter- oder Siebelement kann im Wesentlichen zentral in dem Tankbehälter angeordnet sein.

Das eine Ende des flexiblen Trennelement kann dicht mit dem Filter- oder Siebelement verbunden sein.

Das andere Ende des flexiblen Trennelements kann dicht mit einem Randbereich der Wand des Tankbehälters verbunden sein.

Gemäß einem weiteren Aspekt der Erfindung ist ein Tankbehälter mit einem flexiblen, für die Flüssigkeit undurchlässigen Trennelement und wenigstens zwei variierenden Aufnahmeräumen sowie einem Ein- und Auslass für jede der Flüssigkeiten versehen bzw. sind die Auslässe so gestaltet, dass sie gegen ein Blockieren durch die Folie gesichert sind.

Beispielsweise kann ein Auslass eine Abdeckung als Folien-Blockierschutz aufweisen. Alternativ kann ein Auslass durch ein Filter- oder Siebelement gegen ein Blockieren durch die Folie geschützt sein. Als weitere Alternative kann ein Auslass derart gebogen sein, dass er gegen ein Blockieren durch die Folie geschützt ist.

Weitere Vorteile, Merkmale und Eigenschaften der vorliegenden Erfindung werden aus der folgenden detaillierten Beschreibung von Ausführungsbeispielen und bezugnehmend auf die Figuren der begleitenden Zeichnungen ersichtlich.
Figuren 1a bis 1f zeigen dabei verschiedene Ansichten eines erfindungsgemäßen Tankbehälters, und
Figuren 2 und 3 zeigen Detailansichten eines solchen Behälters.

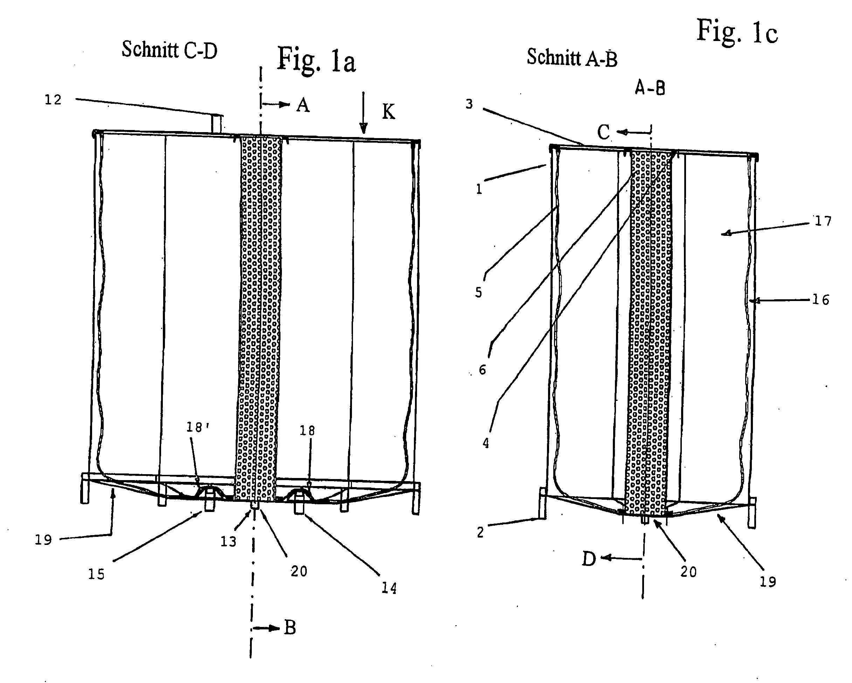

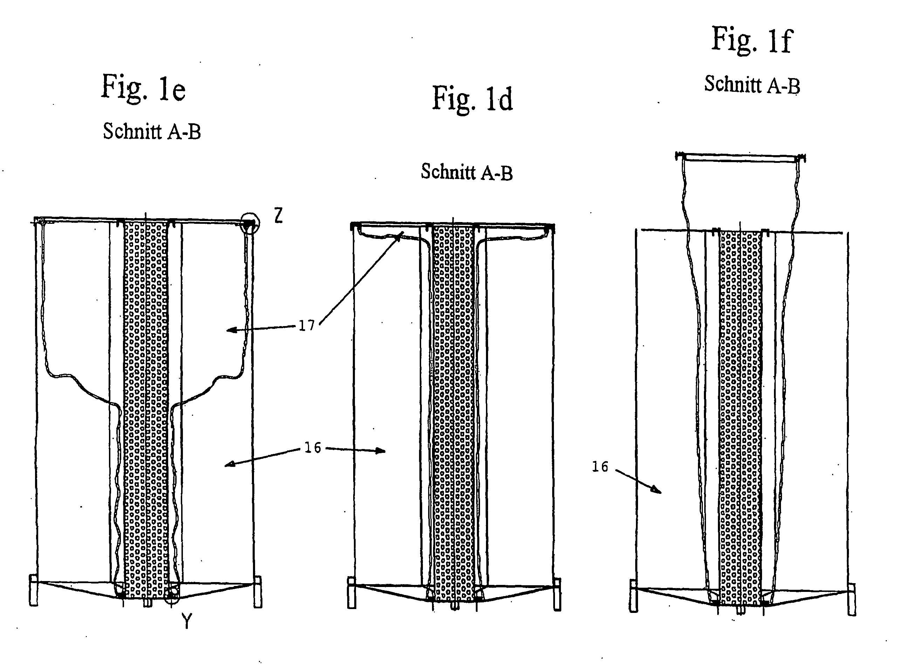

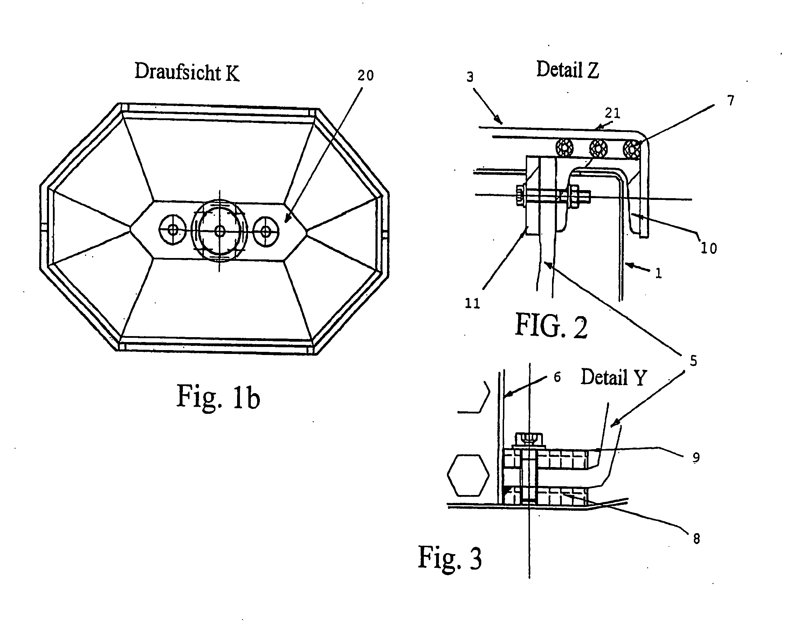

Ein in Figur 1 gezeigter Tankbehälter 1 weist in seinem Inneren ein flexibles Trennelement, im dargestellten Ausführungsbeispiel eine Folie (Membran) 5 auf, die den Behälter 1 in zwei Aufnahmeräume 16, 17 unterteilt. Das Gesamtvolumen des Behälters 1 ist natürlich konstant, indessen kann auf Grund der flexiblen Folie 5 das Verhältnis der beiden Aufnahmeräume 16, 17 (in gewissen Grenzen) zueinander variiert werden.

Der Tank 1 weist ein Sockelgestell 2 und einen Deckel 3 auf, der nach oben abgenommen werden kann. Der Boden 19 des Tanks 1 ist leicht konkav nach unten gewölbt, so dass sich der tiefste Punkt des Tanks 1 in dem Mittenbereich 20 des Bodens 19 befindet. Der Mittenbereich 20 des Bodens 19 selbst wiederum kann im Wesentlichen plan ausgebildet sein.

Der gezeigte Tankbehälter 1 kann insbesondere zur gleichzeitigen Aufnahme von zwei unterschiedlichen flüssigen Medien, wie beispielsweise Frischwasser und Brauchwasser dienen. Die beiden Medien werden im Tankbehälter 1 durch die Folie (Membran) 5 getrennt und können sich aufgrund dieser feuchtigkeitsfesten Trennung nicht miteinander vermischen.

Hinsichtlich der Form des Tankbehälters 1 ist noch anzumerken, dass nach Möglichkeit eine symmetrische (im dargestellten Fall achteckige) Form gewählt wird, da dies die Belastung der Folie 5 minimiert.

Der Tankbehälter 1 weist einen Einlass 12 in dem Deckel 3 auf, der für die Zuführung einer ersten Flüssigkeit dient. Im Wesentlichen in der Mitte und am tiefsten Punkt des Bodens 19 ist der entsprechende Auslass 13 für diese erste Flüssigkeit vorgesehen. Weiterhin sind in dem dargestellten Beispiel ein Einlass 14 sowie ein Auslass 15 jeweils ebenfalls in dem tiefsten Bereich des Bodens 19 des Tankbehälters 1 für die zweite Flüssigkeit vorgesehen.

Der Einlass 12 und der Auslass 13 liegen somit in dem Aufnahmeraum 17, während die Innenseite des Einlasses 14 und des Auslasses 15 für die zweite Flüssigkeit Teil des Aufnahmeraums 16 sind.
Figur 1a zeigt eine seitliche Schnittansicht des Tankbehälters 1.
Figur 1b zeigt eine Ansicht des Tankbehälters 1 bei abgenommenen Deckel 3 von oben.
Figur 1c zeigt eine Schnittansicht längs der Linie A-B in Figur 1a unter der Annahme, dass der Aufnahmeraum 17 für die Flüssigkeit 1 maximal gefüllt ist.
Figur 1d zeigt eine Schnittansicht ähnlich der Figur lc, indessen für den Zustand, dass der Aufnahmebehälter 16 für die zweite Flüssigkeit maximal gefüllt ist.
Figur le zeigt eine Schnittansicht ähnlich der Figuren 1c und 1d, indessen unter Annahme, dass der Tankbehälter 1 etwa halb mit der Flüssigkeit 1 und etwa halb mit der Flüssigkeit 2 gefüllt ist.
Figur 1f zeigt schließlich, wie der Deckel 3 des Tankbehälters 1 nach oben abgenommen werden kann, um die Folie 5 für einen Reinigungsvorgang des Tankbehälters 1 und der Folie 5 zu strecken.

Wie aus den Figuren ersichtlich ist, durchquert die Folie 5 im Wesentlichen den gesamten Behälterraum von oben nach unten und ist zum Einnehmen der verschiedenen Füllungsverhältnisse derart bemessen, dass ihre Länge mehr als die Höhe des Tankbehälters 1 beträgt.

Gemäß der Erfindung ist im Wesentlichen zentral in dem Tankbehälter 1 ein Lochblechzylinder 6 vorgesehen. Genauer gesagt ist der Lochblechzylinder 6 in dem Tankbehälter 1 derart stehend angeordnet, dass sich der Einlass 12 für die erste Flüssigkeit außerhalb des Lochblechzylinders 6 und der Auslass 13 für die erste Flüssigkeit innerhalb des Lochblechzylinders 6 befinden. Im Zuge eines Einlassens der ersten Flüssigkeit durch den Einlass 12 und eines darauf folgenden Ablassens durch den Auslass 13 strömt die erste Flüssigkeit, die sich also in dem Aufnahmeraum 17 befindet, von außen in das Innere des Lochblechzylinders 6, um schließlich an dem Auslass 13 ausgelassen zu werden. Somit dient die gesamte Mantelfläche 22 des Lochblechzylinders 6 als Filter- bzw. Siebfläche, was den Strömungswiderstand bei gleichbleibender Filter- bzw. Siebwirkung vergrößert und einen hohen Durchsatz ermöglicht.

Anstelle des Lochblechzylinders 6 kann beispielsweise auch eine Lochblechwand strömungstechnisch den Einlass 12 von dem Auslass 13 trennen. Gleichzeitig verhindert der Lochblechzylinder 6, dass sich die Folie über den Auslass 13 für die erste Flüssigkeit 1 legt und diesen somit blockieren könnte. Wie in Figur 1d gezeigt, kann sich die Folie bei voller Befüllung des Tankbehälters 1 mit der zweiten Flüssigkeit maximal von außen eng an den Lochblechzylinder 6 anschmiegen, dieser schirmt indessen den Auslass 13 für die erste Flüssigkeit ab.

Gegenüber dem Deckel 3 ist der Lochblechzylinder 6 mittels einer flexiblen Dichtung 4 abgedichtet. Somit wird verhindert, dass einströmende Flüssigkeit, beispielsweise von dem ersten Einlass 12 her, den filternden bzw. siebenden Lochblechzylinder 6 umgeht.

Diese flexible Dichtung 4 ermöglicht ein Entfernen des Deckels 4 und ein dichtes Wiederverschließen.

Gegenüber dem Boden des Tankbehälters 1 ist der Lochblechzylinder 6 ebenfalls dicht verbunden. Dort liegt indessen eine feste Verbindung vor.

Wie im Detail in Figur 3 zu sehen ist, ist die Folie 5 oben mittels einer Klemmleiste 11 an einem Anhängerahmen 10 fixiert. Gleichzeitig sorgt die Klemmleiste 11 an dieser Stelle für eine Abdichtung zwischen den beiden Aufnahmeräumen 16, 17.

Wie insbesondere aus Figur 2 ersichtlich ist, ist die Folie 5 oben im Bereich des Deckels 3 des Tankbehälters 1 in einem Randbereich 21 der Behälterwand 23 bzw. des Deckels 3 befestigt.

Der Einhängerahmen 10 kann aus einem Profilmaterial gefertigt sein, das in einzelne Formsegmente aufgeteilt ist, so dass die Folie 5 herausgehoben werden kann und eine segmentweise Reinigung möglich ist. Dies ist beispielsweise in Figur 1f schematisch dargestellt.

Unten ist die Folie 5 mittels eines Klemmflansches 9 lösbar geklemmt. Gleichzeitig stellt der Klemmflansch 9 die bodenseitige Abdichtung zwischen den Aufnahmeräumen 16 und 17 dar.

Ein Bodenflansch 8 dient zur Befestigung des Lochblechzylinders 6 am Boden 19 des Tankbehälters 1 und stellt die untere Klemmfläche für die Folie 5 her. Die Folie 5 wird somit durch die Zusammenwirkung des Bodenflansches 8 und des Klemmflansches 9 gehalten.

Die Befüllung (Einlass) 12 für die erste Flüssigkeit ist wie gesagt außerhalb des Lochblechzylinders 6 angeordnet, damit der Lochblechzylinders 6 sicher seine Siebwirkung erfüllen kann. Die Position des Auslasses 13 für die erste Flüssigkeit ist an der tiefsten Position des Bodens 19 innerhalb des Lochblechzylinders 6 angeordnet, so dass einerseits der Lochblechzylinder 6 seine Siebwirkung erfüllen kann und andererseits eine vollständige Entleerung des Tankbehälters 1 möglich ist.

Die Anordnung des Einlasses 14 für die zweite Flüssigkeit kann je nach Anforderung entweder am Boden 19 oder aber auch an der Außenwand des Tankbehälters 1 vorgesehen sein.

Die Anordnung für die Auslass 15 für die zweite Flüssigkeit erfolgt vorzugsweise am tiefsten Punkt des Tankbehälters 1 außerhalb des Lochblechzylinders 6.

Der Rohrstutzen 21 des Auslasses 15 ist dabei so ausgeführt, dass er durch die Folie 5 nicht verschlossen werden kann. Dazu kann beispielsweise auf dem Rohrstutzen 21 des Auslasses 15 eine Haube vorgesehen kann. Alternativ kann der Rohrstutzen 21 des Auslasses 15 derart gebogen sein, dass ein Blockieren durch die Folie 5 vermieden werden kann.

## Patentansprüche

1. Tankbehälter (1) zur gleichzeitigen getrennten Aufnahme zweier Flüssigkeiten, aufweisend:
- ein flexibles, für die Flüssigkeiten undurchlässiges Trennelement (5), das den Tankbehälter (1) in wenigstens zwei variierbare Aufnahmeräume (16, 17) für die Flüssigkeiten teilt, und
- jeweils einen Ein- und Auslass (12, 13, 14, 15) für jeden der Aufnahmeräume (16, 17),
wobei stömungstechnisch zwischen dem Ein- und dem Auslass (12, 13) für wenigstens eine der Flüssigkeiten ein Filter- oder Siebelement (6) vorgesehen ist,
**dadurch gekennzeichnet,**
**dass** das Filter- oder Siebelement (6) den Aufnahmeraum (17) für die entsprechende Flüssigkeit durchsetzt.

2. Tankbehälter nach Anspruch 1,
**dadurch gekennzeichnet,**
**dass** das flexible Trennelement eine Folie (5) ist.

3. Tankbehälter nach einem der Ansprüche 1 oder 2,
**dadurch gekennzeichnet,**
**dass** das Filter- oder Siebelement (6) die Form eines Zylinders aufweist, wobei sich einer von Einlass (12) und Auslass (13) für die entsprechende Flüssigkeit außerhalb und der jeweils andere innerhalb des Zylinders (6) angeordnet sind.

4. Tankbehälter nach einem der vorhergehenden Ansprüche,
**dadurch gekennzeichnet,**
**dass** das Filter- oder Siebelement (6) aus Lochblech gefertigt ist.

5. Tankbehälter nach einem der vorhergehenden Ansprüche,
**dadurch gekennzeichnet,**
**dass** das Filter- oder Siebelement (6) derart angeordnet ist, dass ein Blockieren des Auslasses (13) für die zu filternde bzw. siebende Flüssigkeit durch das flexible Trennelement (5) vermieden wird.

6. Tankbehälter nach einem der vorhergehenden Ansprüche,
**dadurch gekennzeichnet,**
**dass** sich der Einlass (12) und der Auslass (13) für die zu filternde bzw. siebende Flüssigkeit an voneinander abgewandten Seiten des Tankbehälters (1) befinden.

7. Tankbehälter nach einem der vorhergehenden Ansprüche,
**dadurch gekennzeichnet,**
**dass** das Filter- oder Siebelement (6) im wesentlichen zentral in dem Tankbehälter (1) angeordnet ist.

8. Tankbehälter nach einem der vorhergehenden Ansprüche,
**dadurch gekennzeichnet,**
**dass** ein Ende des flexiblen Trennelements (5) dicht mit dem Filter- oder Siebelement (6) verbunden ist.

9. Tankbehälter nach Anspruch 8,
**dadurch gekennzeichnet,**
**dass** das andere Ende des flexiblen Trennelements (5) dicht mit einem Randbereich der Wand des Tankbehälters (1) verbunden ist.

10. Tankbehälter 1 nach einem der vorhergehenden Ansprüche,
**dadurch gekennzeichnet,**
**dass** wenigstens ein Auslass (14) eine Abdeckung (18) als Folien-Blockierschutz aufweist.

11. Tankbehälter nach einem der vorhergehenden Ansprüche,
**dadurch gekennzeichnet,**
**dass** wenigstens ein Auslass (15) derart gebogen ist, dass er gegen ein Blockieren durch die Folie (5) geschützt ist.

## Claims

1. Tank container (1) for the simultaneous, separate receiving of two liquids, having:
- a flexible separating element (5) which is impermeable to the liquids and divides the tank container (1) into at least two variable receiving spaces (16, 17) for the liquids, and
- a respective inlet and outlet (12, 13, 14, 15) for each of the receiving spaces (16, 17),
with a filter element or sieve element (6) being provided in terms of flow between the inlet and the outlet (12, 13) for at least one of the liquids, **characterized in that** the filter element or sieve element (6) passes through the receiving space (17) for the corresponding liquid.

2. Tank container according to Claim 1, **characterized in that** the flexible separating element is a film (5) .

3. Tank container according to either of Claims 1 and 2, **characterized in that** the filter element or sieve element (6) is in the form of a cylinder, with either the inlet (12) or the outlet (13) for the corresponding liquid being arranged outside the cylinder (6) and the other in each case being arranged within the cylinder (6).

4. Tank container according to one of the preceding claims, **characterized in that** the filter element or sieve element (6) is manufactured from a perforated plate.

5. Tank container according to one of the preceding claims, **characterized in that** the filter element or sieve element (6) is arranged in such a manner that a blocking by the flexible separating element (5) of the outlet (13) for the liquid to be filtered or sieved is avoided.

6. Tank container according to one of the preceding claims, **characterized in that** the inlet (12) and the outlet (13) for the liquid to be filtered or sieved are situated on sides of the tank container (1) which face away from each other.

7. Tank container according to one of the preceding claims, **characterized in that** the filter element or sieve element (6) is arranged essentially centrally in the tank container (1).

8. Tank container according to one of the preceding claims, **characterized in that** one end of the flexible separating element (5) is tightly connected to the filter element or sieve element (6) .

9. Tank container according to Claim 8, **characterized in that** the other end of the flexible separating element (5) is tightly connected to an edge region of the wall of the tank container (1).

10. Tank container 1 according to one of the preceding claims, **characterized in that** at least one outlet (14) has a covering (18) as protection against blocking by the film.

11. Tank container according to one of the preceding claims, **characterized in that** at least one outlet (15) is bent in such a manner that it is protected against being blocked by the film (5).

## Revendications

1. Réservoir (1) destiné à recevoir simultanément et séparément deux liquides, comportant :
- un élément de séparation flexible (5), imperméable aux liquides, qui sépare le réservoir (1) en au moins deux chambres de réception (16, 17), de volume variable, destinées aux liquides, et
- pour chacune des chambres de réception (16, 17), une entrée et une sortie (12, 13, 14, 15),
un élément de filtrage ou de tamisage (6) étant prévu dans l'écoulement d'au moins l'un des liquides entre l'entrée et la sortie (12, 13),
**caractérisé en ce que** l'élément de filtrage ou de tamisage (6) traverse la chambre de réception (17) destinée au liquide correspondant.

2. Réservoir selon la revendication 1, **caractérisé en ce que** l'élément de séparation flexible est une feuille (5).

3. Réservoir selon l'une des revendications 1 ou 2, **caractérisé en ce que** l'élément de filtrage ou de tamisage (6) a la forme d'un cylindre, un élément parmi l'entrée (12) et la sortie (13) destinées au liquide correspondant étant disposé à l'extérieur du cylindre (6) et l'autre à l'intérieur du cylindre (6).

4. Réservoir selon l'une des revendications précédentes, **caractérisé en ce que** l'élément de filtrage ou de tamisage (6) est fabriqué à partir d'une tôle perforée.

5. Réservoir selon l'une des revendications précédentes, **caractérisé en ce que** l'élément de filtrage ou de tamisage (6) est agencé de telle sorte qu'un blocage, par l'élément de séparation flexible (5), de la sortie (13) destinée au liquide à filtrer respectivement à tamiser est empêché.

6. Réservoir selon l'une des revendications précédentes, **caractérisé en ce que** l'entrée (12) et la sortie (13) destinées au liquide à filtrer respectivement à tamiser se trouvent sur des côtés, opposés l'un à l'autre, du réservoir (1).

7. Réservoir selon l'une des revendications précédentes, **caractérisé en ce que** l'élément de filtrage ou de tamisage (6) est disposé sensiblement au centre du réservoir (1).

8. Réservoir selon l'une des revendications précédentes, **caractérisé en ce qu'**une extrémité de l'élément de séparation flexible (5) est reliée de façon étanche à l'élément de filtrage ou de tamisage (6).

9. Réservoir selon la revendication 8, **caractérisé en ce que** l'autre extrémité de l'élément de séparation flexible (5) est reliée de façon étanche à une région de bordure de la paroi du réservoir (1).

10. Réservoir 1 selon l'une des revendications précédentes, **caractérisé en ce qu'**au moins une sortie (14) comporte un couvercle (18) se présentant sous la forme d'une feuille de protection et de blocage.

11. Réservoir selon l'une des revendications précédentes, **caractérisé en ce que** au moins une sortie (15) est coudée de telle sorte qu'elle est protégée contre tout blocage par la feuille (5).
